# EUROPÄISCHE PATENTANMELDUNG

(11) **EP 1 295 790 A1**
(43) Veröffentlichungstag der Anmeldung: **26.03.2003**
(21) Anmeldenummer: 01810331.7
(22) Anmeldetag: 03.04.2001
(51) Int. Cl.: B64D 17/02, B64C 31/036

(54) **Gleitschirm mit verschiedenen Ventilsystemen**

(71) Anmelder: Kondo, Yoshiji, 341-0018 Misato-shi, Saitama-ken (JP)
(72) Erfinder: Kondo, Yoshiji, 341-0018 Misato-shi, Saitama-ken (JP)

(57) **Zusammenfassung**

Ein Gleitschirm mit verschiedenen Ventilsystemen welche, nachdem sich der Flügel aufgebläht hat, den Druck im Flügel aufrechterhalten. Er ist somit auch bei extremen Windstörungen (Turbulenzen) stabil und kann nicht einklappen und abstürzen.

## Beschreibung

Die Erfindung betrifft einen Gleitschirm mit veschiedenen Ventilsystemen.

Die Bestandteile eines Gleitschirmes sind das Segel(Gleitschirmkappe), Fangleinen, Haupttragegurte, Bremsleinen und Bremsspinne, Gurtzeug, Beschleunigungssystem.
Das Segelmaterial des Gleitschirms besteht aus einem dehnungsstabilen, hochfesten Nylontuch mit einer Impraegnierung, die der UV-Strahlung länger Standhält. Bänder und knickstabile Kunststoffbauteile unnterstützen die Flügelform und die technischen Eigenschaften des Gleitschirms. Der Gleitschirmflügel wird als Kappe bezeichnet. Die endgültige feste Flügelform erhält der Gleitschirm durch den Fahrtwind. Die Luft strömt durch die Eintrittsöffnungen im Bereich der Vorderkante und bläht den Flügel auf. Die Aerodynamiker beschreiben die eingeschlossene Luft als "Staudruck".
Die Kappe ist ein System aus einzelnen Kammern, die durch Zellwände getrennt werden. Die Zellwände sind die tatsächlichen Formgeber des gewölbten Flügelprofils. Sie besitzen Öffnungen zum Druckausgleich zwischen den einzelnen Kammern. Der Druckausgleich ist wichtig für die Stabilität der Gleitsegelkonstruktion. Alle Kammern müssen immer genügend Druck erhalten. Der Staudruck im Flügel ist abhängig von der Fluggeschwindigkeit und der tatsächlichen Lage des Staupunktes. Am Staupunkt hat ein strömendes Luftteilchen einen Moment lang die Geschwindigkeit null; die nachfolgenden Teilchen werden gepresst und geraten unter Druck. Es entsteht ein Überdruck. Für die Konstruktion ist es sinnvoll, genau dort die Eintrittsöffnung zu planen.
Bei extremen Störungen während des Fluges kann der Anstellwinkel des Flügels zur Gefahr werden. Ist der Anstellwinkel zu gross, wird sich die Strömung ganz und gar vom Flügel lösen. Sie wirbelt nur noch turbulent um den Flugkörper herum. Die Strömungsordung ist zerstört. Den Verlust der anliegenden Strömung und der Auftriebskraft nennt man "Stall". Es entstehen viele Falten im Schirm. Hält die Störung an, geht der Gleitschirm in einen Sackflug

In Turbulenzen kann es zu einer Anstellwinkelveränderung kommen. Die anströmende Luft wird mit der Turbulenz in ihrer Wirkungsrichtung abgelenkt. Der Anstellwinkel wird kleiner als null. Die Strömung drückt auf das Obersegel, und der Flügel kollabiert unter dem Druck.
Gegenstand der Erfindung ist ein Gleitschirm mit verschiedenen Ventilsystemen, welche den Druck in dem Flügel bewahren und so den Gleitschirm nicht kollabieren lassen.

In den Eintrittsöffnungen (1) des Gleitschirms befinden sich jeweils abwechselnd ein Alpha-Typ Ventil gefolgt von zwei Beta-Typ Ventile in V Stelllung.

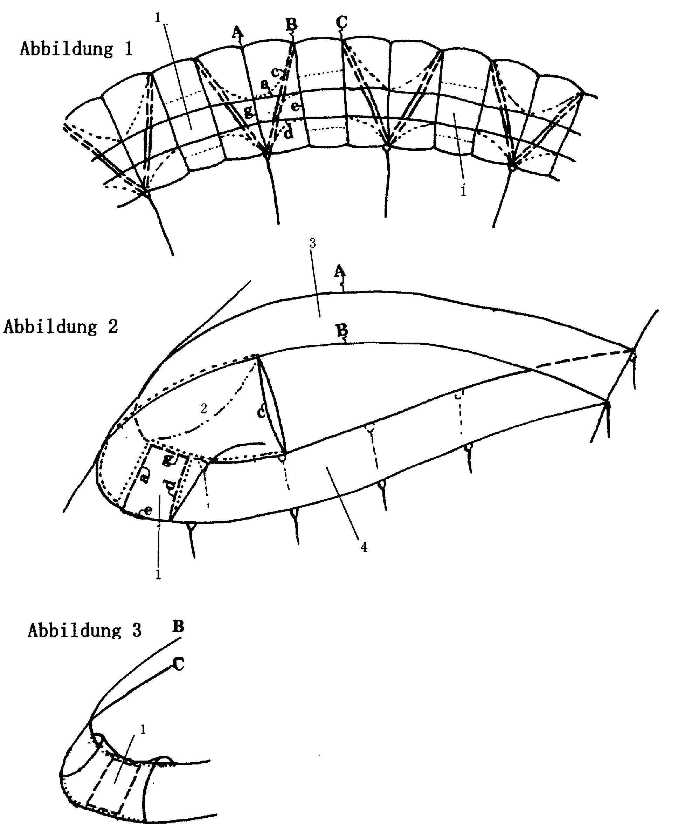

Abbildung 1 zeigt ein Beispiel für den Aufbau des Gleitschirms mit den sich abwechselnden, geschlossenen Ventilen.

Abbildung 2 zeigt den Querschnitt einer Zelle mit einem integriertem Beta-Ventilsystem (2). Ein "Schlauch"(2) geht von der Öffnung diagonal ins Innere der Zelle. Das andere Ende des Schlauches ist an der Kante von Obersegel(3) und Zellwand bzw. Untersegel(4) Und Zellwand fesgemacht.

Abbildung 3 zeigt ein Alpha-Ventilsystem.

Wenn Luft durch die Eintrittsöffnung strömt steigt der Staudruck im Flügel.und die Ventile schliessen sich. Der Flügel behält somit die erwünschte Form und ist nicht mehr von der Luft abhängig um ständig Staudruck zu erzeugen.
Das Resultat ist ein stabiler Flügel auch bei extremen Störungen und kann nicht mehr einklappen.

## Patentansprüche

1. Beta-Ventilsystem, welches schlauchförmig von der Eintrittsöffnung ins Innere der Zelle geht und am anderen Ende an der Kante von Obersegel und Zellwand bzw. Untersegel und Zellwand angebracht ist.

2. Alpha-Ventilsystem, welches tunnelförmig über der Eintrittsöffnung in der Zellinnenwand angebracht ist.
